# EUROPÄISCHE PATENTANMELDUNG

(11) **EP 1 449 797 A1**
(43) Veröffentlichungstag der Anmeldung: **25.08.2004**
(21) Anmeldenummer: 03405114.4
(22) Anmeldetag: 21.02.2003
(51) Int. Cl.: B65H 20/04, B65H 23/10, B23D 33/02

(54) **Verfahren und Vorrichtung zum Verarbeiten einer Bahn aus Papier oder Folienmaterial**

(71) Anmelder: Kern Technologie und Handels GmbH, 3110 Münsingen (CH)
(72) Erfinder: Kern, Peter, 3672 Oberdiessbach (CH)
(74) Vertreter: Roshardt, Werner Alfred, Dipl.-Phys.

(57) **Zusammenfassung**

Bei einem Verfahren zum Verarbeiten einer Bahn (10) aus Papier oder Folienmaterial wird die Bahn (10) zunächst unter einem Bremselement (12) hindurch geführt, danach mit einem Leser (15) abgetastet und schliesslich mit einem Förderantrieb (16) mit variierender Geschwindigkeit gefördert. Das Bremselement (12), z. B. eine Bürste (30), wirkt mit einer variierenden Bremskraft auf die Bahn (10) aus Papier oder Folienmaterial ein, so dass die Bahn (10) gestrafft und eine Wellenbildung der Bahn zwischen Bremselement (12) und Förderantrieb (16) vermieden wird. Dadurch wird die Lesbarkeit von Steuerungsmerkmalen für den Leser (15) verbessert, der Förderantrieb (16) entlastet und Papierlaufstörungen vermieden. Das Verfahren wird vorteilhaft eingesetzt zur Zuführung einer Bahn (10) aus Papier oder Folienmaterial im Stop&Go-Betrieb zu einer Schneidevorrichtung (22), welche die Bahn (10) während einer Stillstandszeit mittels eines Fallmessers (24) quer zur Transportrichtung schneidet.

## Beschreibung

### Technisches Gebiet

Die Erfindung betrifft ein Verfahren zum Verarbeiten einer Bahn aus Papier oder Folienmaterial, wobei die Bahn zunächst unter einem Bremselement hindurch geführt, danach mit einem Leser abgetastet und schliesslich mit einem Förderantrieb mit variierender Geschwindigkeit gefördert wird. Die Erfindung betrifft ferner eine Vorrichtung zur Durchführung des Verfahrens und die Verwendung der Vorrichtung zum Zuführen der Bahn aus Papier oder Folienmaterial zu einer Schneidevorrichtung.

### Stand der Technik

Oft müssen grosse Mengen Papier, z. B. Rechnungen, Mahnungen, Kontoauszüge, Rundschreiben oder andere Drucksachen, schnell und vollkommen automatisiert verarbeitet werden. Zuerst erfolgt meist das Bedrucken einer endlosen Papierbahn durch einen schnellen Hochleistungsdrucker. Die Bahn muss in der Folge möglichst in derselben Geschwindigkeit und je nach Drucksache in verschiedene Formate geschnitten werden, so dass die einzelnen Blätter weiter verarbeitet, insbesondere für den Briefversand verpackt, werden können. Die Information, wo und wie geschnitten werden soll, ist in der Regel durch an der Bahn angebrachte, z. B. aufgedruckte Steuerungsmerkmale vorgegeben. Entsprechend werden schnelle, flexible und störungsunempfindliche Schneidevorrichtungen benötigt.

Besonders kostengünstig und einfach im Aufbau sind Schneidevorrichtungen mit Quermessern, welche in der Art einer Guillotine von der Papierbahn Abschnitte abtrennen. Solche Quermesser bedingen aber eine Zuführung der zu schneidenden Papierbahn im Stop&Go-Betrieb, d. h. die Papierbahn muss zum Schneiden angehalten und anschliessend wieder beschleunigt werden.

Die DE 37 00 112 A1 (Bernd Kunzmann) zeigt eine derartige Schneidevorrichtung für eine Papierbahn, wobei zuerst eine Vorratsschlaufe gebildet wird, von welcher kurzfristig und rasch durch eine Abzugswalze ein Papierbahnabschnitt zum Schneider vorgezogen werden kann. Zwischen der Vorratsschlaufe und der Abzugswalze ist zuerst eine Stegbürste als Bremsorgan fest angeordnet. Darauf folgt eine Druckmarken-Abtastvorrichtung, welche einen Teil der Steuereinrichtung der Schneidevorrichtung bildet. Die Papierbahn wird kurzzeitig angehalten und hinter der Abzugswalze durch einen mit einem feststehenden Messer zusammenwirkenden, quer stehenden Messerbalken geschnitten.

Diese Anordnung setzt der maximal erreichbaren Fördergeschwindigkeit und damit der möglichen Anzahl verarbeiteter Blätter Grenzen. Je grösser die Verarbeitungsgeschwindigkeit gewählt wird, desto höher sind die zu erzielenden Beschleunigungen und Verzögerungen. Besonders beim Anhalten der Papierbahn wirken grosse Kräfte auf die Bahn ein und es besteht die Gefahr, dass das Papier reisst, insbesondere bei allfälligen Perforationen. Ein weiteres Problem ist, dass bei grosser Verarbeitungsgeschwindigkeit die Papierbahn zwischen Bremsorgan und Abzugsrolle nicht mehr plan ist, was die, insbesondere optische, Abtastung der Druckmarken erschwert oder gar verunmöglicht. Die Anordnung führt im Weiteren zu einer grossen Belastung des Antriebs der Abzugswalze. Dieser muss entsprechend aufwändig dimensioniert werden.

### Darstellung der Erfindung

Aufgabe der Erfindung ist es, ein dem eingangs genannten technischen Gebiet zugehörendes Verfahren zum Verarbeiten einer Bahn aus Papier oder Folienmaterial zu schaffen, welches eine hohe Verarbeitungsgeschwindigkeit zulässt und den Förderantrieb entlastet.

Die Lösung der Aufgabe ist durch die Merkmale des Anspruchs 1 definiert. Gemäss der Erfindung wirkt das Bremselement mit einer variierenden Bremskraft auf die Bahn aus Papier oder Folienmaterial ein, so dass die Bahn gestrafft und eine Wellenbildung der Bahn zwischen Bremselement und Förderantrieb vermieden wird.

Die erfindungsgemässe Lösung ermöglicht eine Anpassung der Wirkung des Bremselements an die Dynamik des Papier- oder Folientransports, also an die jeweils erfolgende Beschleunigung oder Verzögerung der Papierbahn durch das Förderelement. Gegenüber einem Bremsorgan mit konstanter Bremskraft kann so die auf die Bahn ausgeübte Bremswirkung verstärkt oder verringert werden. Durch die jeweils optimale Anpassung der Bremskraft kann eine Wellenbildung des Papiers oder der Folie bei hohen Verzögerungen als auch ein Reissen des Papiers oder der Folie bei hohen Beschleunigungen vermieden werden. Gleichermassen wird eine optimale Anpassung der Zuführung an unterschiedliche Förderraten, die z. B. durch die weitere Verarbeitung oder durch schwankende Auslastung bedingt sind, ermöglicht.

Mit Vorteil wird das Bremselement mit einem variierenden Anpressdruck schleifend gegen die Bahn aus Papier oder Folienmaterial gedrückt. Abhängig von der mit der Bahn zusammenwirkenden Kontaktpartie des Bremselements, insbesondere deren Form, Oberfläche und Reibungszahl, kann eine mittlere Bremskraft des Bremselements gewählt werden. Ein geringer Anpressdruck entspricht dann einer geringen Bremskraft, ein hoher Anpressdruck einer hohen Bremskraft. Derartige Bremselemente sind kostengünstig und einfach herstellbar, sie lassen sich einfach und flexibel an verschiedene Bedürfnisse, z. B. das geförderte Material, dessen Querschnitt, dessen Breite, die Fördergeschwindigkeit usw. anpassen.

Als Alternative können z. B. Walzen, Rollen bzw. Walzenpaare oder Rollenpaare als Bremselement gewählt werden, deren Oberflächen im Allgemeinen auf der Papier- oder Folienbahn abrollen, also keinen Schlupf mit der Bahn aufweisen. Durch Änderung des Rollwiderstands, z. B. durch eine Bremsung der Rollen mit einem Anpresselement mit variierendem Anpressdruck oder durch eine Wirbelstrombremse, die auf die Walzen- oder Rollenachse wirkt, kann die Bremskraft der Walzen oder Rollen ebenfalls variiert werden. Rollen oder Walzen und deren Aufhängung sowie entsprechende Elemente zur Änderung des Rollwiderstands sind zwar konstruktiv aufwändiger und deshalb üblicherweise in der Fertigung und der Montage teurer und mechanisch weniger dauerhaft als ein schleifendes Bremselement, deren Eigenschaften lassen sich aber noch besser definieren und in einem weiteren Bereich der Anwendung anpassen.

Wenn die Bahn aus Papier oder Folienmaterial durch den Förderantrieb periodisch beschleunigt und abgebremst wird, so wird mit Vorteil während des Abbremsens eine grössere Bremskraft gewählt als während des Beschleunigens. Dies erlaubt während der Beschleunigungsphase, gegenüber einem dauernd mit derselben Kraft wirkenden Bremselement die Bremskraft zu verringern. Dadurch wird die zur Beschleunigung nötige Kraft vermindert, und die Bahn kann während der Beschleunigungsphase ungehindert gefördert werden. Die Beschleunigung kann schneller erfolgen, so dass die Verarbeitungsgeschwindigkeit gesteigert wird. Gleichzeitig wird der Förderantrieb entlastet. Während der Abbremsphase hingegen kann die Bremskraft gegenüber einem feststehenden Bremselement gesteigert werden. Dies verkürzt die Abbremsphase, während der die Fördergeschwindigkeit bereits verringert ist, die Bahn aber noch nicht geschnitten werden kann. Dadurch wird die Verarbeitungsgeschwindigkeit weiter gesteigert.

Zwischen Beschleunigungs- und Abbremsphase erfolgt der Transport der Papier- oder Folienbahn mit maximaler Fördergeschwindigkeit. In diesem Zeitraum kann die Bremskraft des Bremselements der Konfiguration der Vorrichtung, der Dicke und dem Material der verarbeiteten Papier- oder Folienbahn sowie der Grösse der zu schneidenden Blätter angepasst werden. In der Regel wird eine mittlere Bremskraft gewählt, welche zwischen der Bremskraft in der Beschleunigungs- und derjenigen in der Abbremsphase liegt. Durch die kontinuierliche Anpassung der Bremskraft wird die Papier- oder Folienbahn gestrafft und Wellen der Bahn zwischen Bremselement und Förderantrieb werden während des gesamten Fördervorgangs verhindert. Dadurch können auf der Papier- oder Folienbahn aufgedruckte oder anders angebrachte Markierungen, welche z. B. zur Steuerung einer Schneidvorrichtung dienen, während des gesamten Fördervorgangs zuverlässig abgelesen werden.

Mit Vorteil wirkt das Bremselement im Wesentlichen ab einem Beginn des Abbremsens der Bahn aus Papier oder Folienmaterial und mindestens bis zu einem Stillstand der Bahn mit der grösseren Bremskraft auf die Bahn ein. Während dieses Zeitraums besteht ansonsten die Gefahr, dass sich die Bahn auf der Höhe des Bremselements aufgrund ihrer Trägheit weiterhin mit einer gegenüber dem Förderantrieb höheren Geschwindigkeit weiter bewegt: Wellen wären die Folge. Die Bremskraft wird im Übrigen mit Vorteil stufenweise oder allmählich gesteigert, so dass eine schockartige Belastung der Papier- oder Folienbahn durch eine plötzlich einsetzende Bremskraft vermieden wird.

Mit Vorteil ist das Bremselement eine bewegliche Bürste. Die Borsten schaffen eine gewisse Elastizität in der Förderung der Bahn. Deren Material und Dicke kann dem zu verarbeitenden Papier oder Folienmaterial angepasst werden. Die Bürste lässt sich zudem kostengünstig herstellen, verlangt keine exakte Justierung und ist mechanisch sehr dauerhaft. Schliesslich ist die mechanische Belastung der Papier- oder Folienbahn aufgrund der Vielzahl der Borsten, welche jede nur eine kleine Kraft auf einen kleinen Teil der Bahn überträgt, weitgehend minimiert.

Das Bremselement kann alternativ auch als beweglicher Niederhalter ausgebildet sein. Seine Bremswirkung ist neben dem Anpressdruck abhängig von seiner Form, seinem Oberflächenmaterial und seiner Elastizität. Geeignet ist z. B. eine bewegliche Klappe aus einem dünnen, elastischen Kunststoff- oder Kautschukmaterial, welche - ähnlich wie eine Bürste - in einem flachem Winkel mit variierendem Anpressdruck auf die Papierbahn gedrückt wird.

Vorzugsweise wird der Anpressdruck des schleifenden Bremselements durch einen Drehmagneten mit zwei, insbesondere verstellbaren, Anschlägen eingestellt. Die zwei Anschläge entsprechen einem geringeren und einem höheren Anpressdruck des Bremselements.

Der Drehmagnet kann einfach betätigt werden. Falls eine gewisse Spannung angelegt wird, nimmt er die erste seiner zwei Positionen ein. Ohne Spannung bewegt er sich in seine andere Position, z. B. durch eine Rückstellfeder oder durch das Gewicht der Bürste. Verstellbare Anschläge ermöglichen zudem die einfache mechanische Anpassung des Drehmagneten an verschiedene Anforderungen bezüglich Anpressdruck, damit insbesondere an verschiedene Dicken der zu verarbeitenden Papier- oder Folienbahn. Im einfachsten Fall umfassen die verstellbaren Anschläge im Wesentlichen je eine fest montierte Stellschraube und einen am bewegten Teil des Magneten angeordneten Anschlag.

Durch Variation der an den Drehmagneten angelegten Spannung kann ebenfalls der Widerstand des Bremselements in einer seiner beiden Positionen bestimmt werden.

Soll das Verhalten des Bremselements genau bestimmt werden können, so wird mit Vorteil der Anpressdruck des Bremselements durch einen Motor eingestellt. Entsprechende Linear- oder Schrittmotoren erlauben eine schnelle und präzise Steuerung des Bremselements. Bei streng periodischen Bewegungen des Bremselements können sie zudem mit mechanischen Mitteln, wie z. B. Nockenscheiben, zusammenwirken.

Alternativ kann der Anpressdruck des Bremselements auch z. B. durch einen Hubmagneten bestimmt werden.

Vorzugsweise wird eine Transportgeschwindigkeit der Bahn und/oder eine Zugspannung der Bahn gemessen und die Bremskraft aufgrund der gemessenen Transportgeschwindigkeit und/oder Zugspannung eingestellt. Die Echtzeit-Ermittlung solcher Parameter ermöglicht eine kontinuierliche Anpassung der Einstellung der Bremskraft des Bremselements. Diese kann z. B. immer so gewählt werden, dass die Zugspannung der Bahn einen gewissen Maximalwert unterschreitet und dass damit ein Reissen der Bahn verunmöglicht wird. Alternativ oder ergänzend kann die Transportgeschwindigkeit der Bahn z. B. beim Bremselement und beim Förderelement gemessen werden und die Bremskraft so eingestellt werden, dass die Differenz der Geschwindigkeiten einen gewissen Maximalwert nicht überschreitet. Auf diese Weise kann ein Verfahren zum Verarbeiten einer Papier- oder Folienbahn geschaffen werden, welches sich selbsttätig an das verarbeitete Material, die Fördergeschwindigkeit und weitere Parameter anpasst.

Alternativ kann die Steuerung der Bremskraft über ein vordefiniertes Programm bzw. eine entsprechende mechanische Steuerung erfolgen, welche dem Verarbeitungsprozess angepasst sind.

Eine Vorrichtung zum Verarbeiten einer Bahn aus Papier oder Folienmaterial umfasst ein Bremselement, einen dem Bremselement nachgeordneten Förderantrieb zum Beschleunigen und Verzögern der Bahn und zwischen dem Bremselement und dem Förderantrieb einen Leser zum Abtasten der Bahn. Das Bremselement wirkt mit einer variierenden Bremskraft auf die Bahn aus Papier oder Folienmaterial ein, so dass die Bahn gestrafft und eine Wellenbildung der Bahn zwischen Bremselement und Förderantrieb vermieden wird.

Die erfindungsgemässe Vorrichtung dient insbesondere zum Zuführen einer Bahn aus Papier oder Folienmaterial im Stop&Go-Betrieb zu einer Schneidevorrichtung, welche die Bahn während einer Stillstandszeit mittels eines Fallmessers quer zur Transportrichtung schneidet. Der Schnitt durch ein Fallmesser lässt sich konstruktiv einfach und dadurch kostengünstig realisieren. Beim Schneiden einer Papierbahn durch solche Messer muss aber in der Regel die Bahn stillstehen. Der entsprechende Stop&Go-Betrieb stellt erhöhte Anforderungen an die Zuführung der Papier- oder Folienbahn. Diese muss ohne Wellen zum Messer angefördert werden und darf beim Beschleunigen und Abbremsen nicht zu starken Belastungen ausgesetzt werden, so dass ein Reissen der Bahn ausgeschlossen wird.

Der Leser erkennt Steuerungsmerkmale und steuert die Schneidevorrichtung. Die Steuerungsmerkmale können z. B. optisch oder magnetisch ausgebildet sein und auf der Papierbahn aufgedruckt oder in anderer Weise, z. B. in Form eines Magnetstreifens, angebracht sein. Mit Vorteil können Steuerungsmerkmale erkannt werden, welche sich an einer beliebigen Position auf der Papier- oder Folienbahn bzw. auf einem zu schneidenden Blatt befinden. So ist die Schneidevorrichtung universell mit einer Vielzahl von unterschiedlichen Markierungsformaten anwendbar. Damit dies erreicht werden kann, weist die Lesefläche zwischen Bremselement und Förderantrieb mit Vorteil eine so grosse Längenausdehnung auf, dass die längsten zu schneidenden Dokumente entlang dieser Lesestrecke Platz finden. Der Leser weist nun einen Aufnahmebereich auf, welcher zumindest dieser Fläche entspricht, oder er kann über diese Fläche an jenen Ort verfahren werden, bei welchem die Markierungen bei der aktuell verarbeiteten Bahn aus Papier oder Folienmaterial jeweils angeordnet sind.

Ein Bremselement für eine Vorrichtung zum Verarbeiten einer Bahn aus Papier oder Folienmaterial weist Mittel zum Einwirken auf die Bahn auf, welche so beschaffen sind, dass die Einwirkung mit einer variierenden Bremskraft erfolgen kann.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine graphische Darstellung der Dynamik der Förderung einer Papier- oder Folienbahn im Stop&Go-Betrieb;
- Fig. 2: eine schematische Darstellung einer erfindungsgemässen Vorrichtung zum Verarbeiten einer Bahn aus Papier oder Folienmaterial;
- Fig. 3: eine graphische Darstellung des Verlaufs der Bremskraft während eines Verfahrenszyklus;
- Fig. 4: eine schematische Darstellung der Sensorik und der Steuerung einer erfindungsgemässen Vorrichtung;
- Fig. 5: eine schematische Darstellung einer erfindungsgemässen beweglichen Bürste.

Grundsätzlich sind in den Figuren gleiche Teile mit gleichen Bezugszeichen versehen.

### Wege zur Ausführung der Erfindung

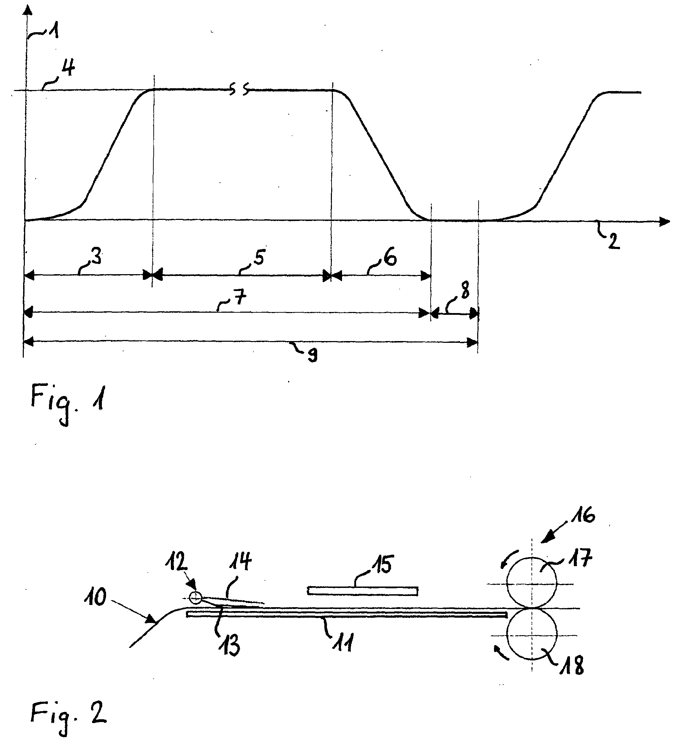

Die Figur 1 zeigt eine graphische Darstellung der Dynamik der Förderung einer Papieroder Folienbahn im Stop&Go-Betrieb. Gezeigt ist der Verlauf der Bahngeschwindigkeit 1 als Funktion der Zeit 2, wobei etwas mehr als ein Verfahrenszyklus abgedeckt wird. Der Zyklus gliedert sich in mehrere Phasen.

In einer ersten Phase, der Beschleunigungsrampe 3 wird die Fördergeschwindigkeit aus dem Stillstand gesteigert, bis eine gewisse Fördergeschwindigkeit 4 erreicht wird. In der nächsten Phase, der Förderphase 5 wird die Bahn mit der erreichten Fördergeschwindigkeit weiter transportiert. Diese Phase bildet den Hauptteil des Zyklus und ist in der Figur verkürzt dargestellt. Darauf folgt als dritte Phase die Bremsrampe 6, während der die Geschwindigkeit wieder bis zum Stillstand verringert wird. Während diesen drei Phasen 3, 5, 6 erfolgt ein Transport der Bahn, deren Gesamtdauer entspricht also einer Transportzeit 7.

Darauf folgt die Stillstandszeit 8, während der die Bahn geschnitten werden kann. Damit ist ein Verfahrenszyklus mit einer Zykluszeit 9 abgelaufen und der nächste, in der Regel identisch ablaufende Zyklus schliesst sich an.

Zur Optimierung der Verarbeitungsgeschwindigkeit sollen nun die Beschleunigungsrampe 3 sowie die Bremsrampe 6 möglichst kurz sein. Das bedeutet, dass möglichst hohe Beschleunigungen und Verzögerungen erreicht werden sollen. Trotzdem soll beim Anhalten der Bahn eine Wellenbildung verhindert und die Bahn möglichst während des gesamten Verzögerungsvorgangs gestrafft werden. Ebenfalls möglichst kurz soll die Stillstandszeit 8 ausfallen, welche zum Schneiden der Bahn benötigt wird. Der Vorteil des erfindungsgemässen Verfahrens zeigt sich nun darin, dass sowohl die Beschleunigungsrampe 3 als auch die Bremsrampe 6 sehr steil ausfallen dürfen und daher weniger Zeit in Anspruch nehmen. Während der Beschleunigung wird nämlich bei der gezeigten Dynamik mit Vorteil die Bremskraft des Bremselements niedrig gewählt, so dass eine geringere Kraft aufgewendet werden muss, um die Bahn zu beschleunigen und dass zugleich die Papier- bzw. Folienspannung erniedrigt wird. Während des Abbremsens hingegen wird die Bremskraft mit Vorteil erhöht, so dass die Bahn beim Förderantrieb rasch abgebremst werden kann, ohne dass davor Wellen entstehen, welche zu einer erschwerten Lesbarkeit von Steuermerkmalen durch den Leser und unter Umständen zu Papierlaufstörungen führen würden.

Die Figur 2 zeigt eine schematische Darstellung einer erfindungsgemässen Vorrichtung zum Verarbeiten einer Bahn aus Papier oder Folienmaterial, wobei lediglich die wichtigsten Elemente dargestellt sind. Die Bahn 10 aus Papier oder Folienmaterial wird von einer vorgeordneten Vorrichtung, z. B. einer Vorratsrolle, einem Vorratsstapel, einem Hochleistungsdrucker oder einem Schlaufenspeicher, zur erfindungsgemässen Vorrichtung gefördert. Eine Papierbahn kann einen Führungslochrand aufweisen, in welchen Zähne eines Fördertraktors eingreifen. Die erfindungsgemässe Vorrichtung ist aber besonders auch für Papier ohne Führungslochrand geeignet.

Die Vorrichtung weist einen flachen Tisch 11 auf, auf welchem die Bahn 10 plan aufliegt. Am Eingang der Vorrichtung ist nun ein bewegliches Bremselement 12 angeordnet, welches zumindest eine Einstellung 13 mit hoher Bremskraft und eine Einstellung 14 mit geringer Bremskraft aufweist. Auf das Bremselement folgt ein Leser 15, welcher auf der Bahn angeordnete oder angebrachte Steuerungsmerkmale erkennt und detektiert. Der Leser 15 erfasst gleichzeitig die Fläche eines ganzen zu schneidenden Dokuments, so dass Steuerungsmerkmale auf dessen ganzer Fläche angeordnet sein dürfen. Für den fehlerfreien und schnellen Betrieb des Lesers 15 ist wichtig, dass die Fläche möglichst plan und frei von Wellen ist. Es kann auch ein Leser mit einer kleineren Detektionsfläche ausgewählt werden, die z. B. nur der Fläche der zu erfassenden Markierung entspricht. In diesem Fall wird der Leser so über der Lesefläche positioniert, dass diese Markierung gelesen werden kann, wenn das zu schneidende Dokument auf der Fläche aufliegt. Falls zu einem späteren Zeitpunkt andere Dokumente mit einer anderen Anordnung von Markierungen verarbeitet werden sollen, wird der Leser vorgängig manuell oder automatisch an die entsprechende Stelle über der Lesefläche verschoben.

Anschliessend folgt der Förderantrieb 16, welcher zwei Rollen 17 und 18 umfasst. Die obere Rolle 17 ist eine Druckrolle aus Gummi, welche mit einem gewissen Druck gegen die untere Rolle 18 gedrückt wird. Der Druck kann z. B. durch eine Feder erzeugt werden. Die untere Rolle 18 bildet die Antriebsachse und ist mit einem Motor gekoppelt. Ihre Lauffläche weist eine grosse Rauheit auf, damit bei hohen Beschleunigungen oder Verzögerungen kein Schlupf gegenüber der Papier- oder Folienbahn 10 auftritt.

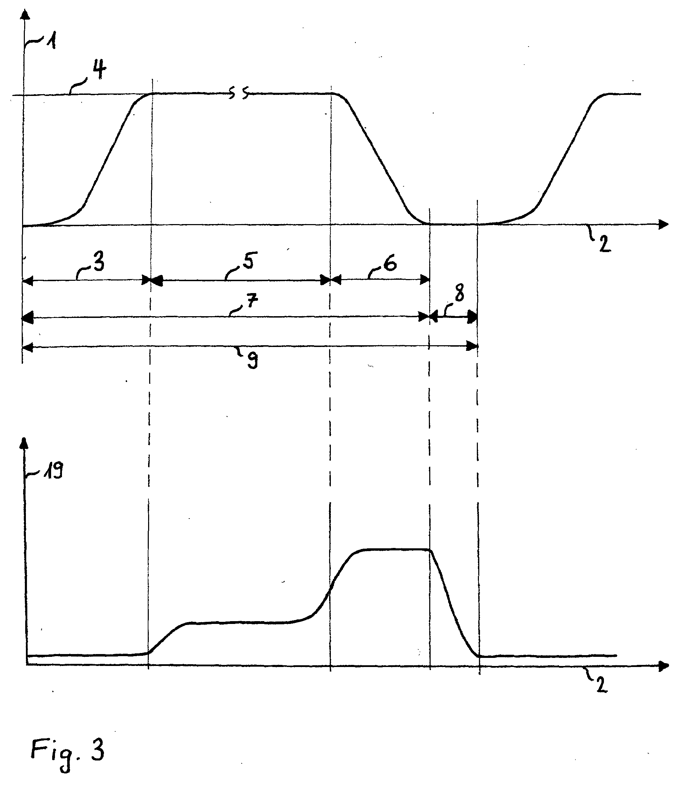

Die Figur 3 zeigt eine graphische Darstellung des Verlaufs der Bremskraft 19 während eines Verfahrenszyklus der erfindungsgemässen Vorrichtung. Der Übersicht halber ist wiederum die Bahngeschwindigkeit 1 der Bahn zu den entsprechenden Zeiten des Zyklus dargestellt. Diese wird bei der erfindungsgemässen Vorrichtung im Wesentlichen durch den Förderantrieb bestimmt, dessen Antriebsrolle keinen Schlupf gegenüber der Bahn aufweist. Während der Beschleunigungsrampe 3 wird ein sehr geringer Wert der Bremskraft 19 gewählt, um die Beschleunigung nicht zu vermindern und um den Förderantrieb möglichst zu entlasten. Die gering gewählte Bremskraft dient lediglich dazu, die Bahn am Eingang der Vorrichtung zu führen und entspricht der geringen Reibungskraft, welche zwischen einer Bahn und einer Führung notwendigerweise auftritt.

In der nächsten Phase, der Förderphase 5, wird ein leicht erhöhter Wert der Bremskraft 19 eingestellt, wobei der Übergang von der geringen zur leicht erhöhten Bremskraft kontinuierlich und allmählich erfolgt. Der leicht erhöhte Wert führt nicht zu einer wesentlichen Belastung des Förderantriebs, sorgt aber für einen stabilen Lauf der Papier- und Folienbahn, indem diese zwischen Bremselement und Förderantrieb gestrafft wird. Dies ermöglicht bei Bedarf den Betrieb des Lesers auch während der Förderung.

Bereits vor Beginn der Bremsrampe 6 wird die Bremskraft 19 des Bremselements allmählich erhöht. Diese Steigerung geschieht nicht schlagartig, so dass die Papier- oder Folienbahn nicht übermässig belastet wird. Ihr Maximum erreicht die Bremskraft 19 kurz nach Beginn der Bremsrampe 6, dieser Wert wird bis zum Ende der Bremsrampe und damit bis zum Stillstand der Papier- oder Folienbahn beibehalten. Die leicht gesteigerte Bremskraft während der Förderphase 5 trägt zu einem schnelleren Erreichen der maximalen Bremskraft bei.

Während der Stillstandszeit 8 kann dann die Bremskraft wieder abgebaut werden, wobei dazu im Prinzip die gesamte Stillstandszeit ausgenutzt werden darf, weil die Bremskraft bei Stillstand der Bahn kaum relevant ist. Wichtig ist, dass beim Einsetzen der erneuten Beschleunigung der Bahn die Bremskraft ihren geringen Wert wieder erreicht hat, so dass eine übermässige Belastung der Bahn und des Förderantriebs vermieden wird.

Falls ein Bremselement gewählt wird, welches nur im Wesentlichen zwei verschiedene fest einstellbare Bremskräfte erlaubt, z. B. eine Bürste, die von einem Drehmagneten betätigt wird, so wird während der Beschleunigungsrampe 3 und in der Förderphase 5 mit Vorteil dieselbe Bremskraft gewählt. Diese entspricht einer mittleren Kraft zwischen der sehr geringen und leicht erhöhten Kraft, die sowohl zur Führung der Papier- oder Folienbahn während beider Phasen ausreicht als auch den Antrieb geringstmöglich belastet. Die Übergänge zwischen den fest einstellbaren Bremskräften lassen sich durch die Konstruktion des Bremselements, z. B. durch die Massenträgheit dessen Bauteile, durch Federn oder Dämpfungen, beeinflussen und der Anwendung anpassen.

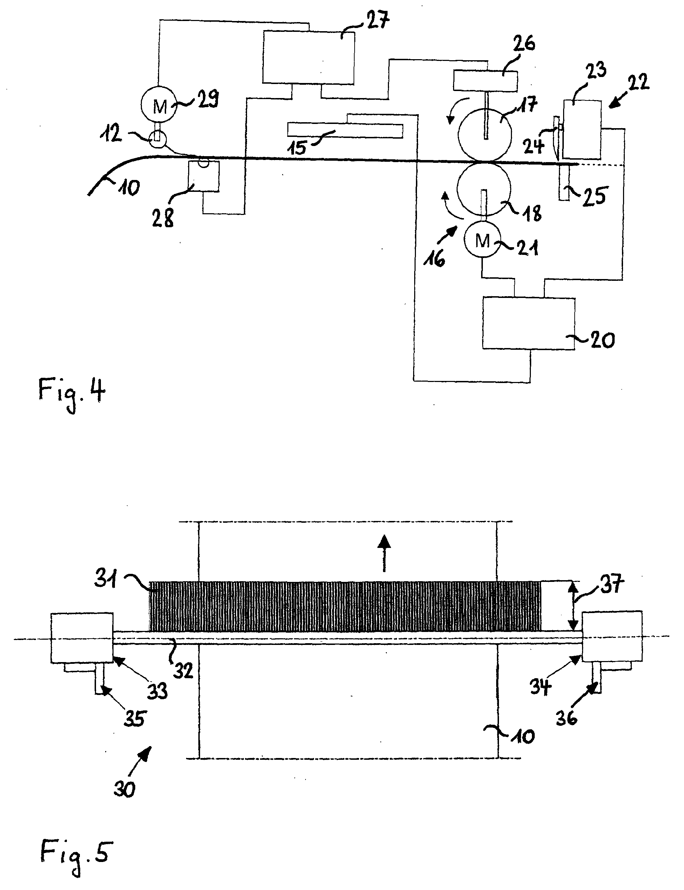

Die Figur 4 ist eine schematische Darstellung der Sensorik und der Steuerung einer erfindungsgemässen Vorrichtung. Der Leser 15 überträgt die detektierten Daten, wie z. B. Ort, Inhalt und Zeit eines erkannten Steuerungsmerkmals an die Steuerung 20. Die Steuerungsmerkmale können nach einem beliebigen Standard bzw. Format codiert sein, z. B. OMR, ein- oder zweidimensionale Barcodes, OME, BCR oder OCR.

Abhängig von diesen Daten sowie gegebenenfalls von weiteren Informationen, welche z. B. durch einen Bediener fest vorgegeben oder über Programmiermittel eingestellt werden können, regelt die Steuerung 20 den Motor 21, welcher mit der unteren Rolle 18 des Förderantriebs 16 verbunden ist, sowie die Schneidevorrichtung 22, welche einen Antrieb 23 ein bewegliches Fallmesser 24 und ein feststehendes Gegenmesser 25 aufweist. Im Weiteren können auch nachfolgende Verarbeitungsmittel, z. B. eine Kuvertiermaschine zum Verpacken der Dokumente in Umschläge oder eine Sortieranlage, durch die vom Leser ermittelten Daten gesteuert werden.

Die obere Rolle 17 des Förderantriebs 16 ist mit einem Geschwindigkeitssensor 26 gekoppelt, welcher die Fördergeschwindigkeit der Papier- bzw. Folienbahn 10 beim Förderantrieb 16 misst. Die entsprechenden Daten werden an eine zweite Steuerung 27 übermittelt. Ein zweiter Geschwindigkeitssensor 28 misst die Fördergeschwindigkeit der Bahn kurz nach dem Bremselement 12 und übermittelt diese Daten ebenfalls an die zweite Steuerung 27. Abhängig von den Messwerten, insbesondere vom absoluten Wert der Geschwindigkeiten als auch von deren Differenz wird der Motor 29, welcher mit dem Bremselement 12 in Verbindung steht und die Bremskraft einstellt, gesteuert.

Die Steuerung 20 für den Förderantrieb und die Schneidevorrichtung sowie die zweite Steuerung 27 für die Straffung der Papier- oder Folienbahn sind in diesem Beispiel unabhängig voneinander. Sie können jedoch miteinander zum Austausch von Daten gekoppelt sein. Auch die Implementierung beider Steuerungsfunktionen in eine einzige Steuerung ist möglich.

Die Figur 5 zeigt eine schematische Darstellung einer erfindungsgemässen beweglichen Bürste, dargestellt von oben. Die Papier- oder Folienbahn 10 wird unter der beweglichen Bürste 30 hindurchgezogen, wobei die Borsten 31 der Bürste 30 in Förderrichtung der Bahn 10 gerichtet sind, aber leicht dazu geneigt sind. Die Borsten 31 sind direkt an einer Drehachse 32 angeordnet. Diese ist auf Kugellagern in zwei Drehmagneten 33, 34 gelagert, welche jeweils über einen Befestigungswinkel 35, 36 an der erfindungsgemässen Vorrichtung befestigt sind.

Das Verhalten der Bürste wird durch mehrere Parameter beeinflusst. Wichtig ist die Anzahl und Dichte der Borsten 31 sowie das verwendete Material und die Borstenlänge 37. Variabel wählbar durch Betätigung der Drehmagneten ist schliesslich der Winkel der Borsten an ihrer Drehachse, damit der Anpressdruck zur Bahn 10 und die wirkende Bremskraft. Dieser Winkel schliesst mit der Papierbahn mit Vorteil einen spitzen Winkel ein von ca. 15 - 35°. Die Borstenenden treffen also flach auf die Bahn, führen dadurch nicht zu Verletzungen der Papier- oder Folienoberfläche und können bei Bedarf mit einer grösseren Borstenlänge auf die Bahn einwirken.

Die Schneidevorrichtung, welcher die Papier- oder Folienbahn mittels der erfindungsgemässen Vorrichtung zugeführt wird, kann anstelle eines Fallmessers auch mit anderen Messern, z. B. einem Hubmesser oder einem Rotationsmesser, arbeiten. Ein Rotationsmesser wird in der Regel nicht im Stop&Go-Betrieb gefahren, eine kontrollierte Papier- bzw. Folienzuführung kann aber auch dann vorteilhaft sein, um z. B. ein einwandfreies Lesen von Steuermerkmalen durch den Leser zu ermöglichen, besonders bei den hohen möglichen Bahngeschwindigkeiten in Geräten mit Rotationsmessern.

Zusammenfassend ist festzustellen, dass die Erfindung ein Verfahren zum Verarbeiten einer Bahn aus Papier oder Folienmaterial schafft, welches eine hohe Verarbeitungsgeschwindigkeit zulässt und den Förderantrieb entlastet.

## Patentansprüche

1. Verfahren zum Verarbeiten einer Bahn (10) aus Papier oder Folienmaterial, wobei die Bahn (10) zunächst unter einem Bremselement (12) hindurch geführt, danach mit einem Leser (15) abgetastet und schliesslich mit einem Förderantrieb (16) mit variierender Geschwindigkeit gefördert wird, **dadurch gekennzeichnet, dass** das Bremselement (12) mit einer variierenden Bremskraft auf die Bahn (10) aus Papier oder Folienmaterial einwirkt, so dass die Bahn (10) gestrafft und eine Wellenbildung der Bahn zwischen Bremselement (12) und Förderantrieb (16) vermieden wird.

2. Verfahren nach Anspruch 1, **dadurch gekennzeichnet, dass** das Bremselement (12) mit einem variierenden Anpressdruck schleifend gegen die Bahn (10) aus Papier oder Folienmaterial gedrückt wird.

3. Verfahren nach Anspruch 1 oder 2, **dadurch gekennzeichnet, dass** die Bahn (10) aus Papier oder Folienmaterial durch den Förderantrieb (16) periodisch beschleunigt und abgebremst wird, wobei während des Abbremsens eine grössere Bremskraft als während des Beschleunigens gewählt wird.

4. Verfahren nach Anspruch 2, **dadurch gekennzeichnet, dass** im Wesentlichen ab einem Beginn des Abbremsens der Bahn (10) aus Papier oder Folienmaterial und mindestens bis zu einem Stillstand der Bahn (10) das Bremselement (12) mit der grösseren Bremskraft auf die Bahn (10) einwirkt.

5. Verfahren nach einem der Ansprüche 2 bis 4, **dadurch gekennzeichnet, dass** das Bremselement (12) eine bewegliche Bürste (30) aufweist.

6. Verfahren nach einem der Ansprüche 1 bis 5, **dadurch gekennzeichnet, dass** eine Transportgeschwindigkeit der Bahn (10) und/oder eine Zugspannung der Bahn (10) gemessen wird und die Bremskraft aufgrund der gemessenen Transportgeschwindigkeit und/oder Zugspannung eingestellt wird.

7. Vorrichtung zum Verarbeiten einer Bahn (10) aus Papier oder Folienmaterial, insbesondere als Zuführung zu einer Schneidevorrichtung (22), mit einem Bremselement (12), einem dem Bremselement (12) nachgeordneten Förderantrieb (16) zum Beschleunigen und Verzögern der Bahn (10) und zwischen dem Bremselement (12) und dem Förderantrieb (16) einem Leser (15) zum Abtasten der Bahn (10), **dadurch gekennzeichnet, dass** das Bremselement (12) mit einer variierenden Bremskraft auf die Bahn (10) aus Papier oder Folienmaterial einwirkt, so dass die Bahn (10) gestrafft wird und eine Wellenbildung der Bahn (10) zwischen Bremselement (12) und Förderantrieb (16) vermieden wird.

8. Vorrichtung nach Anspruch 7, **gekennzeichnet durch** Mittel (33, 34), welche das Bremselement (12) schleifend mit einem variierenden Anpressdruck gegen die Bahn (10) aus Papier oder Folienmaterial drücken.

9. Vorrichtung nach Anspruch 7 oder 8, **gekennzeichnet durch** eine Steuerung (20, 27), welche den Förderantrieb (16) so steuert, dass die Bahn (10) aus Papier oder Folienmaterial periodisch beschleunigt und abgebremst wird, und welche das Bremselement (12) so steuert, dass die Bremskraft während des Beschleunigens kleiner gewählt wird als während des Abbremsens.

10. Vorrichtung nach Anspruch 9, **dadurch gekennzeichnet, dass** die Steuerung (20, 27) das Bremselement (12) so steuert, dass es im Wesentlichen ab einem Beginn des Abbremsens der Bahn (10) aus Papier oder Folienmaterial und mindestens bis zu einem Stillstand der Bahn (10) mit der grösseren Bremskraft auf die Bahn (10) einwirkt.

11. Vorrichtung nach einem der Ansprüche 8 bis 10, **dadurch gekennzeichnet, dass** das Bremselement (12) eine bewegliche Bürste (30) aufweist.

12. Vorrichtung nach einem der Ansprüche 8 bis 11, **dadurch gekennzeichnet, dass** das Bremselement (12) einen Drehmagneten (33, 34) mit zwei, insbesondere verstellbaren, Anschlägen umfasst.

13. Vorrichtung nach einem der Ansprüche 8 bis 11, **dadurch gekennzeichnet, dass** das Bremselement (12) einen Motor (29) umfasst.

14. Vorrichtung nach einem der Ansprüche 9 bis 13, **dadurch gekennzeichnet, dass** sie eine Messvorrichtung (26, 28) umfasst, welche eine Transportgeschwindigkeit der Bahn (10) und/oder eine Zugspannung der Bahn (10) misst, und dass die Steuerung (20, 27) Mittel zum Einstellen der Bremskraft aufgrund der von der Messvorrichtung (26, 28) gemessenen Transportgeschwindigkeit und/oder Zugspannung umfasst.

15. Vorrichtung nach einem der Ansprüche 9 bis 14, **gekennzeichnet durch** eine Schneidevorrichtung (22), welche die Bahn (10) während einer Stillstandszeit mittels eines Fallmessers (24) quer zur Transportrichtung schneidet, wobei die Bahn (10) aus Papier oder Folienmaterial der Schneidevorrichtung (22) im Stop&Go-Betrieb zugeführt wird.

16. Vorrichtung nach Anspruch 15, wobei der Leser (15) Steuerungsmerkmale erkennt und die Schneidevorrichtung (22) steuert.

17. Bremselement für eine Vorrichtung zum Verarbeiten einer Bahn (10) aus Papier oder Folienmaterial, insbesondere nach einem der Ansprüche 7-16, **gekennzeichnet durch** Mittel (12) zum Einwirken auf die Bahn (10) mit einer variierenden Bremskraft.
